# EUROPEAN PATENT APPLICATION

(11) **EP 4 223 126 A1**
(43) Date of publication of application: **09.08.2023**
(21) Application number: 23154925.4
(22) Date of filing: 03.02.2023
(51) Int. Cl.: A01P 3/00, A01N 25/14, A01N 25/30, A01N 37/46, A01N 59/20

(54) **FUNGICIDE COMPOSITION**

(30) Priority: 04.02.2022 EP 22305124
(71) Applicant: UPL Corporation Limited, Port Louis (MU); UPL Europe Ltd, Warrington, Cheshire WA3 6YN (GB)
(72) Inventor: PILLOT, Marc, 13014 Marseille (FR); FERRIER, Frederic, 13014 Marseille (FR); PIROTTE, Alan, 4102 Ougrée (BE)
(74) Representative: J A Kemp LLP

(57) **Abstract**

The present disclosure relates to a fungicidal composition. More particularly, the present disclosure relates to a granular fungicidal composition comprising a copper compound and a phenylamide fungicide. The present disclosure also relates to a process for preparing the fungicidal composition and a method for controlling growth of fungal pests in plants using the same.

## Description

### FIELD OF THE DISCLOSURE:

The present disclosure relates to a fungicidal composition. More particularly, the present disclosure relates to a fungicidal composition comprising a copper compound and a fungicide. The present disclosure also relates to a process for preparing the fungicidal composition and a method for controlling growth of fungal pests in plants using the same.

### BACKGROUND OF THE DISCLOSURE:

Agrochemicals are biologically active ingredients used for controlling pests and diseases and for promoting plant growth in agriculture. Agrochemical formulations comprise active ingredients and additional inactive/inert ingredients. These inert ingredients are chemicals, compounds, and other substances which do not possess biological activity, but are included in the formulation to achieve desired form such as granules, powder, suspension, emulsion, etc., or to impart desirable characteristics such as binding, disintegration, suspensibility, etc.

To control fungal pests or diseases for promoting plant growth, it is required to provide an amount of active ingredient which is sufficient enough for the biological system. However, large quantities of the active ingredient may be inefficient and are also undesirable because of environmental and economic concerns. Furthermore, higher amounts of active ingredient may lead to increased risk of leaching to the ground water or the surface water. Similarly, lower amount of active ingredients may result in lack of control of the pests, and increased risk of resistance from the pests. Inert ingredients, therefore, play a major role for formulating the right amount of active ingredients to be made available to the biological system.

In solid formulations, such as granular formulations, the active ingredients are formulated along with inert ingredients such as binder, filler, disintegrating agents and other surfactants which are generally present in greater amount than the active ingredients itself. Due to this, the active ingredients may sometimes find it difficult to exit the granular formulation as it may be absorbed too deeply into the inert ingredients. Therefore, solid formulations capable of delivering the active ingredient to the target fungal pest is important.

Similarly, although various formulations/compositions of copper compound and fungicide(s) are known in the prior art; there is still a need to develop solid formulations which can effectively deliver the active ingredient, i.e., fungicide(s), to the plants/crops and improve its biological response in controlling phytopathogenic fungal populations. Therefore, it would be advantageous to develop solid fungicidal composition comprising a copper compound and a phenylamide fungicide, wherein the fungicide is embedded within the inert ingredients in such a manner, that the inert ingredient holds the fungicide uniformly within the granular system and once dissociated, the fungicide would readily be available within the system thereby providing efficient coverage to inhibit fungal growth.

### OBJECTIVES OF THE DISCLOSURE:

It is a primary objective of the present disclosure to provide a granular composition comprising a copper compound and a fungicide.

It is another objective of the present disclosure to provide a stable granular composition having efficient retention of the active ingredients and good suspensibility.

It is yet another objective of the present disclosure to provide a stable granular composition having efficient anti-fungal activity.

### SUMMARY OF THE DISCLOSURE:

In one aspect, the present disclosure provides a fungicidal composition comprising a copper compound and a phenylamide fungicide.

In another aspect, the present disclosure provides a fungicidal composition comprising:
(a) a fungicide component comprising a copper compound and a phenylamide fungicide; and
(b) a surfactant blend;
wherein a weight ratio of the fungicide component and the surfactant blend is 2:1 to 5:1.

In yet another aspect, the present disclosure provides a granular fungicidal composition comprising:
(a) a fungicide component comprising an inorganic copper compound and a phenylamide fungicide; and
(b) an anionic surfactant blend;
wherein a weight ratio of the fungicide component and the anionic surfactant blend is 2:1 to 5:1.

In yet another aspect, the present disclosure provides a granular fungicidal composition comprising:
(a) a fungicide component comprising tribasic copper sulphate (TBCS) and a phenylamide fungicide; and
(b) an anionic surfactant blend;
wherein a weight ratio of the fungicide component and the anionic surfactant blend is 2:1 to 5:1.

In yet another aspect, the present disclosure provides a granular fungicidal composition comprising:
(a) a fungicide component comprising tribasic copper sulphate (TBCS) and metalaxyl or its isomers; and
(b) an anionic surfactant blend;
wherein a weight ratio of the fungicide component and the anionic surfactant blend is 2:1 to 5:1.

In yet another aspect, the present disclosure also provides use of a stable water dispersible granule (WDG) composition according to the present disclosure as a fungicide for controlling the growth of fungal pests.

In another aspect, the present disclosure provides a method for controlling growth of fungal pests, said method comprising applying to said plant or a locus or a plant propagation material thereof, a fungicidal composition comprising: a fungicide component comprising a copper compound and a phenylamide fungicide; and a surfactant blend.

In yet another aspect, the present disclosure provides a kit comprising at least one of the ingredients of the stable water dispersible granule (WDG) composition of the present disclosure.

Additional features and advantages of the present disclosure will be apparent from the detailed description that follows, which illustrates by way of example, the most preferred features of the present disclosure which are not to be construed as limiting the scope of the disclosure described herein.

### DETAILED DESCRIPTION OF THE DISCLOSURE:

The present disclosure now will be described hereinafter with reference to the accompanying examples, in which embodiments of the disclosure are shown. This description is not intended to be a detailed catalogue of all the different ways in which the disclosure may be implemented, or all the features that may be added to the instant disclosure. For example, features illustrated with respect to one embodiment may be incorporated into other embodiments, and features illustrated with respect to a particular embodiment may be deleted from that embodiment.

Thus, the disclosure contemplates that in some embodiments of the disclosure, any feature or combination of features set forth herein can be excluded or omitted. In addition, numerous variations and additions to the various embodiments suggested herein will be apparent to those skilled in the art in light of the instant disclosure, which do not depart from the instant disclosure. Hence, the following descriptions are intended to illustrate some particular embodiments of the disclosure, and not to exhaustively specify all permutations, combinations and variations thereof.

Unless otherwise defined, all technical and scientific terms used herein have the same meaning as commonly understood by one of ordinary skill in the art to which this disclosure belongs. Although methods and materials similar or equivalent to those described herein can be used in the practice or testing of the disclosure, suitable methods and materials are described herein.

It must be noted that, as used in this specification, the singular forms "a," "an" and "the" include plural referents unless the content clearly dictates otherwise. The terms "preferred" and "preferably" refer to embodiments of the disclosure that may afford certain benefits, under certain circumstances.

As used herein, the terms "comprising" "including," "having," "containing," "involving," and the like are to be understood to be open-ended, i.e., to mean including but not limited to.

As used herein, the terms "about" or "approximately" are inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 10% or ± 5% of the stated value.

Recitation of ranges of values are merely intended to serve as a shorthand method of referring individually to each separate value falling within the range, unless otherwise indicated herein, and each separate value is incorporated into the specification as if it were individually recited herein. The endpoints of all ranges are included within the range and independently combinable. As used herein, all numerical values or numerical ranges include integers within such ranges and fractions of the values or the integers within ranges unless the context clearly indicates otherwise. Thus, for example, reference to a range of 90-100%, includes 91%, 92%, 93%, 94%, 95%, 95%, 97%, etc., as well as 91.1%, 91.2%, 91.3%, 91.4%, 91.5%, etc., 92.1%, 92.2%, 92.3%, 92.4%, 92.5%, etc., and so forth. All methods described herein can be performed in a suitable order unless otherwise indicated herein or otherwise clearly contradicted by context.

The use of any and all examples, or exemplary language (e.g., "such as"), is intended merely to better illustrate the disclosure and does not pose a limitation on the scope of the disclosure unless otherwise claimed. No language in the specification should be construed as indicating any non-claimed element as essential to the practice of the disclosure as used herein.

While the disclosure has been described with reference to an exemplary embodiment, it will be understood by those skilled in the art that various changes may be made, and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure is not limited to the particular embodiment disclosed as the best mode contemplated for carrying out this disclosure, but that the disclosure will include all embodiments falling within the scope of the appended claims.

The expression of various quantities in terms of "%" or "% w/v" or "% w/w" means the percentage by weight of the total solution or composition unless otherwise specified.

As used herein, the term "agrochemical" is understood to denote an agricultural chemical such as pesticides, fungicides, insecticides, acaricides, herbicides, nematicides, plant growth regulators and can be used interchangeably.

The salts referred to herein are agrochemically acceptable salts. As used herein, an "agrochemically acceptable salt" means a salt which is acceptable for use in agrochemical or horticultural use.

As used herein, the term "agriculturally acceptable amount of active" refers to an amount of an active that kills or inhibits the plant disease for which control is desired, in an amount not significantly toxic to the plant being treated.

As used herein, the term "fungicide" refers to the ability of a substance to decrease or inhibit growth of fungi or oomycetes.

As used herein, the term "fungicidally effective amount" is an amount of active ingredient such as a fungicide which causes an adversely modifying effect and includes deviations from natural development, killing, regulation, desiccation, retardation, and the like.

As used herein, the term "pre-emergence" refers to the time point before seedlings emerge from the ground. When any fungicide is applied at pre-emergence stage, it prevents establishment of the fungi.

As used herein, the term "post-emergence" refers to the time point after seedlings emerge from the ground. When any fungicide is applied at post-emergence stage, it prevents growth of the fungi.

As used herein the term "plant" or "crop" refers to whole plants, plant organs (e.g., leaves, stems, twigs, roots, trunks, limbs, shoots, fruits etc.), plant cells, or plant seeds. This term also encompasses plant crops such as fruits. The term "plant" may further include the propagation material thereof, which may include all the generative parts of the plant such as seeds and vegetative plant material such as cuttings and tubers, which can be used for the multiplication of the plant. This includes seeds, tubers, spores, corms, bulbs, rhizomes, sprouts basal shoots, stolons, and buds and other parts of plants, including seedlings and young plants, which are to be transplanted after germination or after emergence from soil.

The term "locus" as used herein shall denote the vicinity of a desired crop in which control of the spread of phytopathogenic fungi or fungi like pathogen is desired. The locus includes the vicinity of desired crop plants wherein the phytopathogenic fungi or fungi like pathogen infection has either emerged or is most likely to emerge or is yet to emerge.

The term "plant propagation material" refers to the parts of the plant, such as seeds, which can be used for the propagation of the plant and vegetative plant material. There may be mentioned, e.g., the seeds (in the strict sense), roots, fruits, tubers, bulbs, rhizomes, parts of plants. Germinated plants or young plants, which may be transplanted after germination or after emergence from the soil.

The term "seed" embraces seeds and plant propagules of all kinds including but not limited to true seeds, seed pieces, suckers, corms, bulbs, fruit, tubers, grains, cuttings, cut shoots and the like and means in a preferred embodiment true seed.

To term "control" or "controlling" fungus means to inhibit, and/or supress the ability of fungus to grow and/or reproduce, or to limit fungus-related damage or loss in crop plants or denotes control and prevention of a disease. Controlling effects include all deviation from natural development, for example: killing, retardation, decrease of the fugal disease.

As described herein, the term "increased yield" of an agricultural plant means that the yield of a product of the respective plant is increased by a measurable amount over the yield of the same product of the plant produced under the same conditions, but without the application of the compositions described herein.

As used herein, the term "g a.i./L" as used herein denotes the concentration of the respective active ingredient in "grams" present "per litre" of the composition.

As used herein, the term "g a.i./h" as used herein denotes the concentration of the respective active ingredient in "grams" applied "per hectare" of the crop field.

As used herein, the term "pre-mix" refers to a formulation of more than one component in a ready-mix formulation and intended to be applied onto plants with/without further dilution with water to make a mixture.

Each of the aspects described above may have one or more embodiments. Each of the embodiments described hereinafter may apply to one or all of the aspects described hereinabove. These embodiments are intended to be read as being preferred features of one or all of the aspects described hereinabove. Each of the embodiments described hereinafter applies to each of the aspects described hereinabove individually.

In an embodiment, the present disclosure provides an agrochemical composition.

Accordingly in an embodiment, the present disclosure provides a fungicidal composition.

Accordingly in an embodiment, the present disclosure provides a fungicidal composition comprising a copper compound and a fungicide.

In a preferred embodiment, the present disclosure provides a fungicidal composition comprising an inorganic copper compound and a fungicide.

Accordingly in an embodiment, the present disclosure provides a fungicidal composition comprising a copper compound and a phenylamide fungicide.

In a preferred embodiment, the present disclosure provides a fungicidal composition comprising an inorganic copper compound and a phenylamide fungicide.

Accordingly in an embodiment, the present disclosure provides a fungicidal composition comprising:
(a) a fungicide component; and
(b) a surfactant blend.

Accordingly in an embodiment, the present disclosure provides a fungicidal composition comprising:
(a) a fungicide component; and
(b) a surfactant blend;
wherein a weight ratio of the fungicide component to the surfactant blend is 1:1 to 20:1.

In a preferred embodiment, the weight ratio of the fungicide component to the surfactant blend is selected from ratios comprising 1:1, 2:1, 3:1, 4:1, 5:1, 6:1, 7:1, 8:1, 9:1, 10:1, 11:1, 12:1, 13:1, 14:1, 15:1, 16:1, 17:1, 18:1, 19:1 and 20:1.

In a preferred embodiment, the present disclosure provides a fungicidal composition comprising:
(a) a fungicide component; and
(b) an anionic surfactant blend;
wherein a weight ratio of the fungicide component to the anionic surfactant blend is 1:1 to 20:1.

In a preferred embodiment, the present disclosure provides a granular fungicidal composition comprising:
(a) a fungicide component; and
(b) an anionic surfactant blend;
wherein a weight ratio of the fungicide component to the anionic surfactant blend is 1:1 to 20:1.

In a preferred embodiment, the present disclosure provides a fungicidal composition comprising:
(a) a fungicide component comprising a copper compound and a phenylamide fungicide; and
(b) an anionic surfactant blend;
wherein a weight ratio of the fungicide component to the anionic surfactant blend is 1:1 to 20:1.

In an embodiment, the present disclosure provides a granular fungicidal composition comprising:
(a) a fungicide component comprising a copper compound and a phenylamide fungicide; and
(b) an anionic surfactant blend;
wherein a weight ratio of the fungicide component to the anionic surfactant blend is 1:1 to 20:1.

In an embodiment, the present disclosure provides a granular fungicidal composition comprising:
(a) a fungicide component comprising a copper compound and a phenylamide fungicide; and
(b) an anionic surfactant blend;
wherein a weight ratio of the fungicide component to the anionic surfactant blend is 1:1 to 15:1.

In a preferred embodiment, the present disclosure provides a granular fungicidal composition comprising:
(a) a fungicide component comprising a copper compound and a phenylamide fungicide; and
(b) an anionic surfactant blend;
wherein a weight ratio of the fungicide component to the anionic surfactant blend is 1:1 to 10:1.

In a preferred embodiment, the present disclosure provides a granular fungicidal composition comprising:
(a) a fungicide component comprising a copper compound and a phenylamide fungicide; and
(b) an anionic surfactant blend;
wherein a weight ratio of the fungicide component to the anionic surfactant blend is 1:1 to 5:1.

In a preferred embodiment, the present disclosure provides a granular fungicidal composition comprising:
(a) a fungicide component comprising a copper compound and a phenylamide fungicide; and
(b) an anionic surfactant blend;
wherein a weight ratio of the fungicide component to the anionic surfactant blend is 2:1 to 5:1.

In a preferred embodiment, the present disclosure provides a granular fungicidal composition comprising:
(a) a fungicide component comprising a copper compound and a phenylamide fungicide; and
(b) an anionic surfactant blend;
wherein a weight ratio of the fungicide component to the anionic surfactant blend is 3:1.

In a preferred embodiment, the present disclosure provides a granular fungicidal composition comprising:
(a) a fungicide component comprising a copper compound and a phenylamide fungicide; and
(b) an anionic surfactant blend;
wherein a weight ratio of the fungicide component to the anionic surfactant blend is 2.6:1.

In an embodiment, the copper compound is an inorganic copper compound.

In a preferred embodiment, the copper compound is a copper salt.

In a preferred embodiment, the copper compound is a copper salt selected from the group comprising copper sulphate, tribasic copper sulphate, copper chloride, copper oxide, cupric oxide, copper nitrate, copper perchlorate, copper bromide, copper hydroxide, copper iodide, cupric acetate, copper sulfate pentahydrate, and salts, isomers or derivatives thereof.

In a preferred embodiment, the copper compound is tribasic copper sulphate (TBCS).

In a preferred embodiment, the copper compound is copper sulphate.

In an embodiment, the phenylamide fungicide is selected from the group comprising metalaxyl, metalaxyl-M, furalaxyl, benalaxyl, ofurace, oxadixyl, or their isomers thereof.

In a preferred embodiment, the phenylamide fungicide is metalaxyl.

In a preferred embodiment, the phenylamide fungicide is metalaxyl-M.

In a preferred embodiment, the phenylamide fungicide is benalaxyl.

According to an embodiment of the present disclosure, the fungicidal composition comprises from about 10% w/w to about 50% w/w of the fungicide component of total weight of the fungicidal composition.

In a preferred embodiment of the present disclosure, the fungicidal composition comprises from about 20% w/w to about 40% w/w of the fungicide component of total weight of the fungicidal composition.

In a preferred embodiment of the present disclosure, the fungicidal composition comprises from about 25% w/w to about 35% w/w of the fungicide component of total weight of the fungicidal composition.

In a preferred embodiment of the present disclosure, the fungicidal composition comprises of about 35% w/w of the fungicide component of total weight of the fungicidal composition.

In a preferred embodiment of the present disclosure, the fungicidal composition comprises of about 34.8% w/w of the fungicide component of total weight of the fungicidal composition.

According to an embodiment of the present disclosure, the fungicidal composition comprises from about 10% w/w to about 50% w/w of the copper compound of total weight of the fungicidal composition.

In a preferred embodiment of the present disclosure, the fungicidal composition comprises from about 20% w/w to about 40% w/w of the copper compound of total weight of the fungicidal composition.

In a preferred embodiment of the present disclosure, the fungicidal composition comprises from about 25% w/w to about 35% w/w of the copper compound of total weight of the fungicidal composition.

In a preferred embodiment of the present disclosure, the fungicidal composition comprises of about 30% w/w of the copper compound of total weight of the fungicidal composition.

In a preferred embodiment of the present disclosure, the fungicidal composition comprises of about 30% w/w of tribasic copper sulphate (TBCS) of total weight of the fungicidal composition.

According to an embodiment of the present disclosure, the fungicidal composition comprises from about 1% w/w to about 20% w/w of the phenylamide fungicide of total weight of the fungicidal composition.

In a preferred embodiment of the present disclosure, the fungicidal composition comprises from about 1% w/w to about 10% w/w of the phenylamide fungicide of total weight of the fungicidal composition.

In a preferred embodiment of the present disclosure, the fungicidal composition comprises from about 1% w/w to about 10% w/w of metalaxyl of total weight of the fungicidal composition.

In a preferred embodiment of the present disclosure, the fungicidal composition comprises from about 1% w/w to about 10% w/w of metalaxyl-M of total weight of the fungicidal composition.

In a preferred embodiment of the present disclosure, the fungicidal composition comprises of about 5% w/w of metalaxyl of total weight of the fungicidal composition.

In a preferred embodiment of the present disclosure, the fungicidal composition comprises of about 5% w/w of metalaxyl-M of total weight of the fungicidal composition.

In a preferred embodiment of the present disclosure, the fungicidal composition comprises of about 4.8% w/w of metalaxyl of total weight of the fungicidal composition.

In a preferred embodiment of the present disclosure, the fungicidal composition comprises of about 4.8% w/w of metalaxyl-M of total weight of the fungicidal composition.

According to an embodiment, the fungicidal composition comprises from about 1% w/w to about 40% w/w of the anionic surfactant blend of total weight of the fungicidal composition.

In a preferred embodiment, the fungicidal composition comprises from about 5% w/w to about 30% w/w of the anionic surfactant blend of total weight of the fungicidal composition.

In a preferred embodiment, the fungicidal composition comprises from about 10% w/w to about 25% w/w of the anionic surfactant blend of total weight of the fungicidal composition.

In a preferred embodiment, the fungicidal composition of from about 13.5% w/w of the anionic surfactant blend of total weight of the fungicidal composition.

According to an embodiment of the present disclosure, the copper compound and the phenylamide fungicide are present in a weight ratio from about 10:1 to about 1:1.

In a preferred embodiment, the weight ratio of the copper compound to the phenylamide fungicide is selected from ratios comprising 10:1, 9:1, 8:1, 7:1, 6:1, 5:1, 4:1, 3:1, 2:1 and 1:1.

In a preferred embodiment of the present disclosure, the fungicidal composition comprises a copper compound to a phenylamide fungicide in a weight ratio from about 8:1 to about 2:1.

In a preferred embodiment of the present disclosure, the fungicidal composition comprises a copper compound to a phenylamide fungicide in a weight ratio from about 7:1 to about 3:1.

In a preferred embodiment of the present disclosure, the fungicidal composition comprises a copper compound to a phenylamide fungicide in a weight ratio of about 6:1.

In a preferred embodiment of the present disclosure, the fungicidal composition comprises an inorganic copper compound to a phenylamide fungicide in a weight ratio of about 6:1.

In another preferred embodiment of the present disclosure, the fungicidal composition comprises tribasic copper sulphate (TBCS) to metalaxyl in a weight ratio of about 6:1.

In another preferred embodiment of the present disclosure, the fungicidal composition comprises tribasic copper sulphate (TBCS) to metalaxyl-M in a weight ratio of about 6:1.

In another preferred embodiment of the present disclosure, the fungicidal composition comprises tribasic copper sulphate (TBCS) to metalaxyl in a weight ratio of about 6.25: 1.

In another preferred embodiment of the present disclosure, the fungicidal composition comprises tribasic copper sulphate (TBCS) to metalaxyl-M in a weight ratio of about 6.25: 1.

In an embodiment, the present disclosure provides a granular fungicidal composition comprising:
(a) a fungicide component comprising tribasic copper sulphate (TBCS) and metalaxyl; and
(b) an anionic surfactant blend;
wherein a weight ratio of the fungicide component to the anionic surfactant blend from about 1:1 to about 20:1.

In an embodiment, the present disclosure provides a granular fungicidal composition comprising:
(a) a fungicide component comprising tribasic copper sulphate (TBCS) and metalaxyl-M; and
(b) an anionic surfactant blend;
wherein a weight ratio of the fungicide component to the anionic surfactant blend from about 1:1 to about 20:1.

According to an embodiment, the anionic surfactant blend comprises surfactants selected from a sulfonic acid surfactant and a phosphate ester surfactant.

In a preferred embodiment, the sulfonic acid surfactant is selected from the group comprising substituted and polymeric alkyl and aryl sulfonates such as sodium alkyl naphthalene sulfonate, sodium naphthalene sulfonate, sodium naphthalene sulfonic acid, calcium lignosulfonate, sodium lignosulfonate, sodium lignosulfonic acid ammonium lignosulfonate, or combinations thereof.

In a preferred embodiment, the sulfonic acid surfactant is selected from the group comprising sodium naphthalene sulfonate, sodium naphthalene sulfonic acid, sodium lignosulfonate and sodium lignosulfonic acid.

In an embodiment, the phosphate ester surfactant is tristyrylphenol phosphate surfactant.

According to an embodiment, the anionic surfactant blend comprises at least one sulfonic acid surfactant and a phosphate ester surfactant.

In a preferred embodiment, the anionic surfactant blend comprises at least two sulfonic acid surfactant and a phosphate ester surfactant.

In a preferred embodiment, the anionic surfactant blend comprises at least two salts of sulfonic acid surfactant and a phosphate ester surfactant.

In another preferred embodiment, the anionic surfactant blend comprises sodium naphthalene sulfonate, sodium lignosulfonate and tristyrylphenol phosphate surfactant.

In another preferred embodiment, the anionic surfactant blend comprises sodium naphthalene sulfonic acid, sodium lignosulfonic and tristyrylphenol phosphate surfactant.

According to an embodiment, the fungicidal composition comprises from about 1% w/w to about 25% w/w of sodium naphthalene sulfonate of total weight of the fungicidal composition.

In a preferred embodiment, the fungicidal composition comprises from about 1% w/w to about 20% w/w of sodium naphthalene sulfonate of total weight of the fungicidal composition.

In a preferred embodiment, the fungicidal composition comprises from about 1% w/w to about 10% w/w of sodium naphthalene sulfonate of total weight of the fungicidal composition.

In a preferred embodiment, the fungicidal composition comprises of about 6% w/w of sodium naphthalene sulfonate of total weight of the fungicidal composition.

According to an embodiment, the fungicidal composition comprises from about 1% w/w to about 25% w/w of sodium naphthalene sulfonic acid of total weight of the fungicidal composition.

In a preferred embodiment, the fungicidal composition comprises from about 1% w/w to about 20% w/w of sodium naphthalene sulfonic acid of total weight of the fungicidal composition.

In a preferred embodiment, the fungicidal composition comprises from about 1% w/w to about 10% w/w of sodium naphthalene sulfonic acid of total weight of the fungicidal composition.

In a preferred embodiment, the fungicidal composition comprises of about 6% w/w of sodium naphthalene sulfonic acid of total weight of the fungicidal composition.

According to an embodiment, the fungicidal composition comprises from about 1% w/w to about 25% w/w of sodium lignosulfonate of total weight of the fungicidal composition.

In a preferred embodiment, the fungicidal composition comprises from about 1% w/w to about 20% w/w of sodium lignosulfonate of total weight of the fungicidal composition.

In a preferred embodiment, the fungicidal composition comprises from about 1% w/w to about 10% w/w of sodium lignosulfonate of total weight of the fungicidal composition.

In a preferred embodiment, the fungicidal composition comprises of about 6% w/w of sodium lignosulfonate of total weight of the fungicidal composition.

According to an embodiment, the fungicidal composition comprises from about 1% w/w to about 25% w/w of sodium lignosulfonic acid of total weight of the fungicidal composition.

In a preferred embodiment, the fungicidal composition comprises from about 1% w/w to about 20% w/w of sodium lignosulfonic acid of total weight of the fungicidal composition.

In a preferred embodiment, the fungicidal composition comprises from about 1% w/w to about 10% w/w of sodium lignosulfonic acid of total weight of the fungicidal composition.

In a preferred embodiment, the fungicidal composition comprises of about 6% w/w of sodium lignosulfonic acid of total weight of the fungicidal composition.

According to an embodiment, the fungicidal composition comprises from about 0.1% w/w to about 25% w/w of tristyrylphenol phosphate of total weight of the fungicidal composition.

In a preferred embodiment, the fungicidal composition comprises from about 0.1% w/w to about 20% w/w of tristyrylphenol phosphate of total weight of the fungicidal composition.

In a preferred embodiment, the fungicidal composition comprises from about 0.1% w/w to about 10% w/w of tristyrylphenol phosphate of total weight of the fungicidal composition.

In a preferred embodiment, the fungicidal composition comprises of about 1.5% w/w oftristyrylphenol phosphate of total weight of the fungicidal composition.

According to an embodiment, the anionic surfactant blend comprises at least two sulfonic acid surfactants in a weight ratio from about 0.1: 1 to about 1:0.1.

In a preferred embodiment, the weight ratio of at least two sulfonic acid surfactants is selected from ratios comprising 0.1:1, 0.2:1, 0.3:1, 0.4:1, 0.5:1, 0.6:1, 0.7:1, 0.8:1, 0.9:1 and 1:1.

In a preferred embodiment, the weight ratio of at least two sulfonic acid surfactants is selected from ratios comprising 1:0.1, 1:0.2, 1:0.3, 1:0.4, 1:0.5, 1:0.6, 1:0.7, 1:0.8, 1:0.9 and 1:1.

In a preferred embodiment, the anionic surfactant blend comprises at least two salts of sulfonic acid surfactants in a weight ratio from about 0.1:1 to about 1:0.1.

In a preferred embodiment, the anionic surfactant blend comprises sodium naphthalene sulfonate to sodium lignosulfonate in a weight ratio of from about 0.1:1 to about 1:0.1.

In a preferred embodiment, the anionic surfactant blend comprises sodium naphthalene sulfonate to sodium lignosulfonate in a weight ratio of about 1:1.

In a preferred embodiment, the anionic surfactant blend comprises sodium naphthalene sulfonic acid to sodium lignosulfonic acid in a weight ratio of from about 0.1:1 to about 1:0.1.

In a preferred embodiment, the anionic surfactant blend comprises sodium naphthalene sulfonic acid to sodium lignosulfonic acid in a weight ratio of about 1:1.

According to embodiment, the anionic surfactant blend comprises at least two sulfonic acid surfactants to a phosphate ester surfactant in a weight ratio of from about 20:20:1 to about 1:1:1.

In a preferred embodiment, the weight ratio of at least two sulfonic acid surfactants to a phosphate ester surfactant is selected from ratios comprising 20:20:1, 19:19:1, 18:18:1, 17:17:1, 16:16:1, 15:15:1, 14:14:1, 13:13:1, 12:12:1, 11:11:1, 10:10:1, 9:9:1, 8:8:1, 7:7:1, 6:6:1, 5:5:1, 4:4:1, 3:3:1, 2:2:1 and 1:1:1.

In a preferred embodiment, the anionic surfactant blend comprises at least two salts of sulfonic acid surfactants to a phosphate ester surfactant in a weight ratio from about 20:20:1 to about 1:1:1.

In a preferred embodiment, the anionic surfactant blend comprises sodium naphthalene sulfonate to sodium lignosulfonate to tristyrylphenol phosphate surfactant in a weight ratio from about 20:20:1 to about 1:1:1.

In a preferred embodiment, the sulfonic acid surfactants and the phosphate ester surfactant are present in a weight ratio from about 15:15:1 to about 1:1:1.

In a preferred embodiment, the anionic surfactant blend comprises sodium naphthalene sulfonate to sodium lignosulfonate to tristyrylphenol phosphate surfactant in a weight ratio from about 10:10:1 to about 1:1:1.

In a preferred embodiment, the anionic surfactant blend comprises sodium naphthalene sulfonate to sodium lignosulfonate to tristyrylphenol phosphate surfactant in a weight ratio of about 6:6:1.5.

In a preferred embodiment, the anionic surfactant blend comprises sodium naphthalene sulfonate to sodium lignosulfonate to tristyrylphenol phosphate surfactant in a weight ratio of about 6:6:1.

In a preferred embodiment, the anionic surfactant blend comprises sodium naphthalene sulfonic acid to sodium lignosulfonic acid to tristyrylphenol phosphate surfactant in a weight ratio from about 20:20:1 to about 1:1:1.

In a preferred embodiment, the anionic surfactant blend comprises sodium naphthalene sulfonic acid to sodium lignosulfonic acid to tristyrylphenol phosphate surfactant in a weight ratio from about 15:15:1 to about 1:1:1.

In a preferred embodiment, the anionic surfactant blend comprises sodium naphthalene sulfonic acid to sodium lignosulfonic acid to tristyrylphenol phosphate surfactant in a weight ratio from about 10:10:1 to about 1:1:1.

In a preferred embodiment, the anionic surfactant blend comprises sodium naphthalene sulfonic acid to sodium lignosulfonic acid to tristyrylphenol phosphate surfactant in a weight ratio of about 6:6:1.5.

In a preferred embodiment, the anionic surfactant blend comprises sodium naphthalene sulfonic acid to sodium lignosulfonic acid to tristyrylphenol phosphate surfactant in a weight ratio of about 6:6:1.

According to an embodiment, the present disclosure provides a granular fungicidal composition comprising:
(a) a fungicide component comprising tribasic copper sulphate (TBCS) and metalaxyl; and
(b) an anionic surfactant blend comprising sodium naphthalene sulfonate, sodium lignosulfonate and tristyrylphenol phosphate surfactant;
wherein a weight ratio of the fungicide component to the anionic surfactant blend from about 1:1 to about 20:1.

According to an embodiment, the present disclosure provides a granular fungicidal composition comprising:
(a) a fungicide component comprising tribasic copper sulphate (TBCS) and metalaxyl; and
(b) an anionic surfactant blend comprising sodium naphthalene sulfonic acid, sodium lignosulfonic acid and tristyrylphenol phosphate surfactant;
wherein a weight ratio of the fungicide component to the anionic surfactant blend from about 1:1 to about 20:1.

According to an embodiment, the present disclosure provides a granular fungicidal composition comprising:
(a) a fungicide component comprising tribasic copper sulphate (TBCS) and metalaxyl-M; and
(b) an anionic surfactant blend comprising sodium naphthalene sulfonate, sodium lignosulfonate and tristyrylphenol phosphate surfactant;
wherein a weight ratio of the fungicide component to the anionic surfactant blend from about 1:1 to about 20:1.

According to an embodiment, the present disclosure provides a granular fungicidal composition comprising:
(a) a fungicide component comprising tribasic copper sulphate (TBCS) and metalaxyl-M; and
(b) an anionic surfactant blend comprising sodium naphthalene sulfonic acid, sodium lignosulfonic acid and tristyrylphenol phosphate surfactant;
wherein a weight ratio of the fungicide component to the anionic surfactant blend from about 1:1 to about 20:1.

According to an embodiment, the present disclosure provides a granular fungicidal composition comprising:
(a) a fungicide component comprising tribasic copper sulphate (TBCS) and metalaxyl;
(b) an anionic surfactant blend comprising sodium naphthalene sulfonate, sodium lignosulfonate and tristyrylphenol phosphate surfactant; and
(c) at least one agrochemically acceptable excipient;
wherein a weight ratio of the fungicide component to the anionic surfactant blend from about 1:1 to about 20:1.

According to an embodiment, the present disclosure provides a granular fungicidal composition comprising:
(a) a fungicide component comprising tribasic copper sulphate (TBCS) and metalaxyl;
(b) an anionic surfactant blend comprising sodium naphthalene sulfonic acid, sodium lignosulfonic acid and tristyrylphenol phosphate surfactant; and
(c) at least one agrochemically acceptable excipient;
wherein a weight ratio of the fungicide component to the anionic surfactant blend from about 1:1 to about 20:1.

According to an embodiment, the present disclosure provides a granular fungicidal composition comprising:
(a) a fungicide component comprising tribasic copper sulphate (TBCS) and metalaxyl-M;
(b) an anionic surfactant blend comprising sodium naphthalene sulfonate, sodium lignosulfonate and tristyrylphenol phosphate surfactant; and
(c) at least one agrochemically acceptable excipient;
wherein a weight ratio of the fungicide component to the anionic surfactant blend from about 1:1 to about 20:1.

According to an embodiment, the present disclosure provides a granular fungicidal composition comprising:
(a) a fungicide component comprising tribasic copper sulphate (TBCS) and metalaxyl-M;
(b) an anionic surfactant blend comprising sodium naphthalene sulfonic acid, sodium lignosulfonic acid and tristyrylphenol phosphate surfactant; and
(c) at least one agrochemically acceptable excipient;
wherein a weight ratio of the fungicide component to the anionic surfactant blend from about 1:1 to about 20:1.

According to an embodiment of the present disclosure, the agrochemically acceptable excipients are selected from one or more of emulsifiers, colorants, thickeners/binders, antifreeze agents, antifoaming agents, antioxidants, solvents, preservatives, glidants, anticaking agents, pH-regulating agents, buffering agents, formulation aids, disintegrants, inert, wetting agents, or combinations thereof.

In another embodiment, emulsifiers which can be advantageously employed herein can be readily determined by those skilled in the art and include various non-ionic, anionic, cationic, and amphoteric emulsifiers, or a blend of two or more emulsifiers. Examples of non-ionic emulsifiers useful in preparing the emulsifiable concentrates include the polyalkylene glycol ethers and condensation products of alkyl and aryl phenols, aliphatic alcohols, aliphatic amines or fatty acids with ethylene oxide, propylene oxides such as the ethoxylated alkyl phenols and carboxylic esters solubilized with the polyol or polyoxyalkylene. Cationic emulsifiers include quaternary ammonium compounds and fatty amine salts. Anionic emulsifiers include the oil-soluble salts (e.g., calcium) of alkylaryl sulfonic acids, oil-soluble salts or sulfated polyglycol ethers and appropriate salts of phosphated polyglycol ether.

In an embodiment, colorants may be selected from iron oxide, titanium oxide and Prussian Blue, and organic dyestuffs, such as alizarin dyestuffs, azo dyestuffs or metal phthalocyanine dyestuffs, and trace elements, such as salts of iron, manganese, boron, copper, cobalt, molybdenum and zinc.

In an embodiment, thickener/binders or gelling agent may be selected from but not limited to molasses, granulated sugar, alginates, karaya gum, jaguar gum, tragacanth gum, polysaccharide gum, mucilage, xanthan gum or combination thereof. In another embodiment, the binder may be selected from silicates such as magnesium aluminium silicate, polyvinyl acetates, polyvinyl acetate copolymers, polyvinyl alcohols, polyvinyl alcohol copolymers, celluloses, including ethylcelluloses and methylcelluloses, hydroxymethyl celluloses, hydroxypropylcelluloses, hydroxymethylpropyl-celluloses, polyvinylpyrolidones, dextrins, malto-dextrins, polysaccharides, fats, oils, proteins, gum arabics, shellacs, vinylidene chloride, vinylidene chloride copolymers, acrylic copolymers, starches, polyvinyl acrylates, zeins, gelatin, carboxymethylcellulose, chitosan, polyethylene oxide, acrylimide polymers and copolymers, polyhydroxyethyl acrylate, methylacrylimide monomers, alginate, ethylcellulose, polychloroprene and syrups or mixtures thereof; polymers and copolymers of vinyl acetate, methyl cellulose, vinylidene chloride, acrylic, cellulose, polyvinylpyrrolidone and polysaccharide; polymers and copolymers of vinylidene chloride and vinyl acetate-ethylene copolymers; combinations of polyvinyl alcohol and sucrose; plasticizers such as glycerol, propylene glycol, polyglycols.

In another embodiment, antifreeze agent(s) added to the composition may be alcohols selected from the group comprising of but not limited to ethylene glycol, 1,2-propylene glycol, 1,3-propylene glycol, 1,2-butanediol, 1,3-butanediol, 1,4-butanediol, 1,4-pentanediol, 3-methyl-1,5-pentanediol, 2,3-dimethyl-2,3-butanediol, trimethylol propane, mannitol, sorbitol, glycerol, pentaerythritol, 1,4-cyclohexanedimethanol, xylenol, bisphenols such as bisphenol A or the like. In addition, ether alcohols such as diethylene glycol, triethylene glycol, tetraethylene glycol, polyoxyethylene or polyoxypropylene glycols of molecular weight up to about 4000, diethylene glycol monomethyl ether, diethylene glycol monoethylether, triethylene glycol monomethylether, butoxyethanol, butylene glycol monobutyl ether, dipentaerythritol, tripentaerythritol, tetrapentaerythritol, diglycerol, triglycerol, tetraglycerol, pentaglycerol, hexaglycerol, heptaglycerol, octaglycerol.

According to an embodiment, antifoam agent may be selected from polydimethoxysiloxane, polydimethylsiloxane, alkyl poly acrylates, castor oil, fatty acids, fatty acids esters, fatty acids sulfate, fatty alcohol, fatty alcohol esters, fatty alcohol sulfate, foot olive oil, mono & di glyceride, paraffin oil, paraffin wax, poly propylene glycol, silicone oil, vegetable fats, vegetable fats sulfate, vegetable oil, vegetable oil sulfate, vegetable wax, vegetable wax sulfate, agents based on silicon or magnesium stearate, and blend of maltodextrin, and methylated silica.

The agrochemical composition may also comprise one or more antioxidants. Preferably, the agrochemical formulation comprises an antioxidant. Antioxidants are, for example, amino acids (e.g., glycine, histidine, tyrosine, tryptophan) and derivatives thereof, imidazole and imidazole derivatives (e.g., urocanic acid), peptides, such as, for example, D,L-carnosine, D-carnosine, L-carnosine and derivatives thereof (e.g., anserine), carotenoids, carotenes (e.g., α-carotene, β-carotene, lycopene) and derivatives thereof, lipoic acid and derivatives thereof (e.g., dihydrolipoic acid), aurothioglucose, propylthiouracil and further thio compounds (e.g., thioglycerol, thiosorbitol, thioglycolic acid, thioredoxin, glutathione, cysteine, cystine, cystamine and the glycosyl, N-acetyl, methyl, ethyl, propyl, amyl, butyl, lauryl, palmitoyl, oleyl, γ-linoleyl, cholesteryl and glyceryl esters thereof), and salts thereof, dilauryl thiodipropionate, distearyl thiodipropionate, thiodipropionic acid and derivatives thereof (esters, ethers, peptides, lipids, nucleotides, nucleosides and salts), and sulfoximine compounds (e.g., buthionine sulfoximines, homocysteine sulfoximine, buthionine sulfones, penta-, hexa-, heptathionine sulfoximine) in very low tolerated doses (e.g., pmol/kg to pmol/kg), also metal chelating agents (e.g., α-hydroxy fatty acids, EDTA, EGTA, phytic acid, lactoferrin), α-hydroxy acids (e.g., citric acid, lactic acid, malic acid), humic acids, bile acid, bile extracts, gallic esters (e.g., propyl, octyl and dodecyl gallate), flavonoids, catechins, bilirubin, biliverdin and derivatives thereof, unsaturated fatty acids and derivatives thereof (e.g., γ-linolenic acid, linoleic acid, arachidonic acid, oleic acid), folic acid and derivatives thereof, hydroquinone and derivatives thereof (e.g., arbutin), ubiquinone and ubiquinol, and derivatives thereof, vitamin C and derivatives thereof (e.g., ascorbyl palmitate, stearate, dipalmitate, acetate, Mg ascorbyl phosphates, sodium and magnesium ascorbate, disodium ascorbyl phosphate and sulfate, potassium ascorbyl tocopheryl phosphate, chitosan ascorbate), isoascorbic acid and derivatives thereof, tocopherols and derivatives thereof (e.g., tocopheryl acetate, linoleate, oleate and succinate, tocophereth-5, tocophereth-10, tocophereth-12, tocophereth-18, tocophereth-50, tocophersolan), vitamin A and derivatives (e.g., vitamin A palmitate), the coniferyl benzoate of benzoin resin, rutin, rutinic acid and derivatives thereof, disodium rutinyl disulfate, cinnamic acid and derivatives thereof (e.g., ferulic acid, ethyl ferulate, caffeic acid), kojic acid, chitosan glycolate and salicylate, butylhydroxytoluene, butylhydroxyanisol, nordihydroguaiacic acid, nordihydroguaiaretic acid, trihydroxybutyrophenone, uric acid and derivatives thereof, mannose and derivatives thereof, selenium and selenium derivatives (e.g., selenomethionine), stilbenes and stilbene derivatives (e.g., stilbene oxide, trans-stilbene oxide). According to the disclosure, suitable derivatives (salts, esters, sugars, nucleotides, nucleosides, peptides, and lipids) and mixtures of these specified active ingredients or plant extracts (e.g., teatree oil, rosemary extract and rosemarinic acid) which comprise these antioxidants can be used. In general, mixtures of the aforementioned antioxidants are possible.

According to an embodiment, examples of suitable solvents are water, oils of vegetable, or derivatives. In principle, solvent mixtures may also be used.

In another embodiment, suitable preservatives are for example benzothiazoles, 1,2-benzisothiazolin-3-one, sodium dichloro-s-triazinetrione, sodium benzoate, potassium sorbate, 1,2-phenyl-isothiazolin-3-one, inter chloroxylenol paraoxybenzoate butyl, benzoic acid, and combinations thereof.

In another embodiment, suitable inert are for example precipitated silica, titanium dioxide, kaolin, bentonite, soapstone, talc, attapulgite, ceramic, montmorillonite, pumice, sepiolite, diatomaceous earth, sand, clay, dolomite, calcite, magnesium oxides, magnesium carbonates, sucrose, corn starch, citric acid and its salts, and combinations thereof.

In an embodiment, the wetting agent may be selected from dialkyl naphthalene sulphonate formaldehyde condensate, dialkyl naphthalene sulphonate sodium salt and sodium naphthalene sulfonate - formaldehyde condensate.

According to an embodiment of the present disclosure, the fungicidal composition comprises from about 1% w/w to about 30% w/w of the agrochemically acceptable excipient of total weight of the fungicidal composition.

Accordingly in an embodiment, the present disclosure provides a fungicidal composition comprising:
(a) from about 10% w/w to about 50% w/w of the fungicide component;
(b) from about 1% w/w to about 40% w/w of the anionic surfactant blend; and
(c) from about 1% w/w to about 30% w/w of the agrochemically acceptable excipient.

Accordingly in an embodiment, the present disclosure provides a fungicidal composition comprising:
(a) from about 20% w/w to about 40% w/w of the fungicide component;
(b) from about 5% w/w to about 30% w/w of the anionic surfactant blend; and
(c) from about 1% w/w to about 30% w/w of the agrochemically acceptable excipient.

Accordingly in an embodiment, the present disclosure provides a fungicidal composition comprising:
(a) from about 25% w/w to about 35% w/w of the fungicide component;
(b) from about 10% w/w to about 25% w/w of the anionic surfactant blend; and
(c) from about 1% w/w to about 30% w/w of the agrochemically acceptable excipient.

Accordingly in an embodiment, the present disclosure provides a fungicidal composition comprising:
(a) of about 34.8% w/w of the fungicide component;
(b) of about 13.5% w/w of the anionic surfactant blend; and
(c) from about 1% w/w to about 30% w/w of the agrochemically acceptable excipient.

Accordingly in an embodiment, the present disclosure provides a fungicidal composition comprising:
(a) a fungicide component; and
(b) a surfactant blend;
wherein the fungicidal composition is in a form of a solid formulation.

In an embodiment, the fungicidal composition is selected from Powder for dry soil application (DS), Granule/soil applied (GR), Controlled (Slow or Fast) release granules (CR), Jambo balls or bags (bags in water soluble pouch), Water soluble granule (SG), Water dispersible granule (WG or WDG), or Soil Applied Granules (SAG).

According to an embodiment, the fungicidal composition is in a form of a water dispersible granule (WG or WDG).

Accordingly in an embodiment, the present disclosure provides a WDG fungicidal composition comprising:
(a) a fungicide component; and
(b) a surfactant blend.

Accordingly in an embodiment, the present disclosure provides a WDG fungicidal composition comprising:
(a) a fungicide component; and
(b) a surfactant blend;
wherein a weight ratio of the fungicide component to the surfactant blend is 1:1 to 20:1.

In a preferred embodiment, the present disclosure provides a WDG fungicidal composition comprising:
(a) a fungicide component; and
(b) an anionic surfactant blend;
wherein a weight ratio of the fungicide component to the anionic surfactant blend is 1:1 to 20:1.

In a preferred embodiment, the present disclosure provides a WDG fungicidal composition comprising:
(a) a fungicide component comprising a copper compound and a phenylamide fungicide; and
(b) an anionic surfactant blend;
wherein a weight ratio of the fungicide component to the anionic surfactant blend is 1:1 to 20:1.

In a preferred embodiment, the present disclosure provides a WDG fungicidal composition comprising:
(a) a fungicide component comprising tribasic copper sulphate (TBCS) and metalaxyl;
(b) an anionic surfactant blend comprising sodium naphthalene sulfonate, sodium lignosulfonate and tristyrylphenol phosphate surfactant;
wherein a weight ratio of the fungicide component to the anionic surfactant blend is 1:1 to 20:1.

In a preferred embodiment, the present disclosure provides a WDG fungicidal composition comprising:
(a) a fungicide component comprising tribasic copper sulphate (TBCS) and metalaxyl-M;
(b) an anionic surfactant blend comprising sodium naphthalene sulfonate, sodium lignosulfonate and tristyrylphenol phosphate surfactant;
wherein a weight ratio of the fungicide component to the anionic surfactant blend is 1:1 to 20:1.

In a preferred embodiment, the present disclosure provides a WDG fungicidal composition comprising:
(a) a fungicide component comprising tribasic copper sulphate (TBCS) and metalaxyl;
(b) an anionic surfactant blend comprising sodium naphthalene sulfonic acid, sodium lignosulfonic acid and tristyrylphenol phosphate surfactant;
wherein a weight ratio of the fungicide component to the anionic surfactant blend is 1:1 to 20:1.

In a preferred embodiment, the present disclosure provides a WDG fungicidal composition comprising:
(a) a fungicide component comprising tribasic copper sulphate (TBCS) and metalaxyl-M;
(b) an anionic surfactant blend comprising sodium naphthalene sulfonic acid, sodium lignosulfonic acid and tristyrylphenol phosphate surfactant;
wherein a weight ratio of the fungicide component to the anionic surfactant blend is 1:1 to 20:1.

According to an embodiment, the granular fungicidal composition while not being limited to any particular sizes, the granules of the present disclosure typically have an average particle size in a range from about 0.1 µm to about 10 µm, preferably from about 0.25 mm to about 5 mm, and more preferably from about 0.5 mm to about 3 mm, although sizes outside of this range may also be included.

Accordingly in an embodiment, the present disclosure provides a fungicidal composition comprising:
(a) a fungicide component; and
(b) a surfactant blend;
wherein the fungicidal composition is in a form of a tank mix or a pre-formulated (pre-mix)/ready-mix formulation.

According to an embodiment, the present disclosure provides a fungicidal composition in a form of a pre-formulated (pre-mix)/ready-mix formulation.

Accordingly in an embodiment, the present disclosure provides a pre-mix fungicidal composition comprising:
(a) a fungicide component; and
(b) a surfactant blend.

In a preferred embodiment, the present disclosure provides a pre-mix fungicidal composition comprising:
(a) a fungicide component comprising tribasic copper sulphate (TBCS) and metalaxyl;
(b) an anionic surfactant blend comprising sodium naphthalene sulfonate, sodium lignosulfonate and tristyrylphenol phosphate surfactant;
wherein a weight ratio of the fungicide component to the anionic surfactant blend is 1:1 to 20:1.

In a preferred embodiment, the present disclosure provides a pre-mix fungicidal composition comprising:
(a) a fungicide component comprising tribasic copper sulphate (TBCS) and metalaxyl-M;
(b) an anionic surfactant blend comprising sodium naphthalene sulfonate, sodium lignosulfonate and tristyrylphenol phosphate surfactant;
wherein a weight ratio of the fungicide component to the anionic surfactant blend is 1:1 to 20:1.

In a preferred embodiment, the present disclosure provides a pre-mix fungicidal composition comprising:
(a) a fungicide component comprising tribasic copper sulphate (TBCS) and metalaxyl;
(b) an anionic surfactant blend comprising sodium naphthalene sulfonic acid, sodium lignosulfonic acid and tristyrylphenol phosphate surfactant;
wherein a weight ratio of the fungicide component to the anionic surfactant blend is 1:1 to 20:1.

In a preferred embodiment, the present disclosure provides a pre-mix fungicidal composition comprising:
(a) a fungicide component comprising tribasic copper sulphate (TBCS) and metalaxyl-M;
(b) an anionic surfactant blend comprising sodium naphthalene sulfonic acid, sodium lignosulfonic acid and tristyrylphenol phosphate surfactant;
wherein a weight ratio of the fungicide component to the anionic surfactant blend is 1:1 to 20:1.

Accordingly in an embodiment, the fungicidal combinations disclosed herein may be applied together as a pre-mix formulation.

In yet another embodiment, the fungicidal compositions may be applied to the soil prior to emergence of the seedling (pre-emergence), to prevent establishment of the fungi. Alternatively, the application of the fungicidal composition may be a post the emergence of the seedling (post-emergence) to prevent growth of the fungi.

In yet another embodiment, the fungicidal combination may be applied as a foliar spray at different timings during crop development, with as many early applications (pre-emergence) or late post-emergence.

According to an embodiment, the present disclosure provides use of a fungicidal composition comprising a copper compound and a fungicide, for controlling the growth of fungal pests.

In a preferred embodiment, the present disclosure provides use of a fungicidal composition comprising an inorganic copper compound and a phenylamide fungicide, for controlling the growth of fungal pests.

In a preferred embodiment, the present disclosure provides use of the fungicidal combination for controlling the growth of fungal pests, wherein the fungicidal combination comprises:
(a) a fungicide component; and
(b) a surfactant blend.

In a preferred embodiment, the present disclosure provides use of the fungicidal combination for controlling the growth of fungal pests, wherein the fungicidal combination comprises:
(a) a fungicide component comprising a copper compound and a phenylamide fungicide; and
(b) an anionic surfactant blend;
wherein a weight ratio of the fungicide component to the anionic surfactant blend is 1:1 to 20:1.

In a preferred embodiment, the present disclosure provides use of the fungicidal combination for controlling the growth of fungal pests, wherein the fungicidal combination comprises:
(a) a fungicide component comprising tribasic copper sulphate (TBCS) and metalaxyl; and
(b) an anionic surfactant blend comprising sodium naphthalene sulfonate, sodium lignosulfonate and tristyrylphenol phosphate surfactant;
wherein a weight ratio of the fungicide component to the anionic surfactant blend is 1:1 to 20:1.

In a preferred embodiment, the present disclosure provides use of the fungicidal combination for controlling the growth of fungal pests, wherein the fungicidal combination comprises:
(a) a fungicide component comprising tribasic copper sulphate (TBCS) and metalaxyl-M; and
(b) an anionic surfactant blend comprising sodium naphthalene sulfonate, sodium lignosulfonate and tristyrylphenol phosphate surfactant;
wherein a weight ratio of the fungicide component to the anionic surfactant blend is 1:1 to 20:1.

In a preferred embodiment, the present disclosure provides use of the fungicidal combination for controlling the growth of fungal pests, wherein the fungicidal combination comprises:
(a) a fungicide component comprising tribasic copper sulphate (TBCS) and metalaxyl; and
(b) an anionic surfactant blend comprising sodium naphthalene sulfonic acid, sodium lignosulfonic acid and tristyrylphenol phosphate surfactant;
wherein a weight ratio of the fungicide component to the anionic surfactant blend is 1:1 to 20:1.

In a preferred embodiment, the present disclosure provides use of the fungicidal combination for controlling the growth of fungal pests, wherein the fungicidal combination comprises:
(a) a fungicide component comprising tribasic copper sulphate (TBCS) and metalaxyl-M; and
(b) an anionic surfactant blend comprising sodium naphthalene sulfonic acid, sodium lignosulfonic acid and tristyrylphenol phosphate surfactant;
wherein a weight ratio of the fungicide component to the anionic surfactant blend is 1:1 to 20:1.

In a preferred embodiment, the present disclosure provides use of the fungicidal combination for controlling the growth of fungal pests, wherein the fungicidal combination comprises:
(a) a fungicide component comprising tribasic copper sulphate (TBCS) and metalaxyl;
(b) an anionic surfactant blend comprising sodium naphthalene sulfonate, sodium lignosulfonate and tristyrylphenol phosphate surfactant; and
(c) at least one agrochemically acceptable excipient;
wherein a weight ratio of the fungicide component to the anionic surfactant blend is 1:1 to 20:1.

In a preferred embodiment, the present disclosure provides use of the fungicidal combination for controlling the growth of fungal pests, wherein the fungicidal combination comprises:
(a) a fungicide component comprising tribasic copper sulphate (TBCS) and metalaxyl-M;
(b) an anionic surfactant blend comprising sodium naphthalene sulfonate, sodium lignosulfonate and tristyrylphenol phosphate surfactant; and
(c) at least one agrochemically acceptable excipient;
wherein a weight ratio of the fungicide component to the anionic surfactant blend is 1:1 to 20:1.

In a preferred embodiment, the present disclosure provides use of the fungicidal combination for controlling the growth of fungal pests, wherein the fungicidal combination comprises:
(a) a fungicide component comprising tribasic copper sulphate (TBCS) and metalaxyl;
(b) an anionic surfactant blend comprising sodium naphthalene sulfonic acid, sodium lignosulfonic acid and tristyrylphenol phosphate surfactant; and
(c) at least one agrochemically acceptable excipient;
wherein a weight ratio of the fungicide component to the anionic surfactant blend is 1:1 to 20:1.

In a preferred embodiment, the present disclosure provides use of the fungicidal combination for controlling the growth of fungal pests, wherein the fungicidal combination comprises:
(a) a fungicide component comprising tribasic copper sulphate (TBCS) and metalaxyl-M;
(b) an anionic surfactant blend comprising sodium naphthalene sulfonic acid, sodium lignosulfonic acid and tristyrylphenol phosphate surfactant; and
(c) at least one agrochemically acceptable excipient;
wherein a weight ratio of the fungicide component to the anionic surfactant blend is 1:1 to 20:1.

According to another embodiment, the fungicidal composition may be applied before or after infection of the plants by the fungi, to the plant or a locus or a propagation material thereof.

In another embodiment, the fungicidal composition may be used for foliar application, application to a ground or to a plant or a locus or a plant propagation material, or combinations thereof.

According to an embodiment, a process for preparing fungicidal composition comprising:
(a) a fungicide component comprising a copper compound and a phenylamide fungicide; and
(b) an anionic surfactant blend;
wherein the process comprises:
(i) mixing the fungicide component comprising the copper compound, the phenylamide fungicide with the anionic surfactant blend to obtain a pre-mix,
(ii) coating the pre-mix on carrier granules to obtain coated granules, and
(iii) drying the coated granules to obtain a fungicidal composition.

According to an embodiment, a process for preparing a granular fungicidal composition comprising:
(a) a fungicide component comprising tribasic copper sulphate (TBCS) and metalaxyl; and
(b) an anionic surfactant blend comprising sodium naphthalene sulfonate, sodium lignosulfonate and tristyrylphenol phosphate surfactant;
wherein the process comprises:
(i) mixing the fungicide component comprising tribasic copper sulphate (TBCS) and metalaxyl with the anionic surfactant blend comprising sodium naphthalene sulfonate, sodium lignosulfonate and tristyrylphenol phosphate surfactant to obtain a pre-mix,
(ii) coating the pre-mix on carrier granules to obtain coated granules, and
(iii) drying the coated granules to obtain a granular fungicidal composition.

According to an embodiment, a process for preparing a granular fungicidal composition comprising:
(a) a fungicide component comprising tribasic copper sulphate (TBCS) and metalaxyl-M; and
(b) an anionic surfactant blend comprising sodium naphthalene sulfonate, sodium lignosulfonate and tristyrylphenol phosphate surfactant;
wherein the process comprises:
(i) mixing the fungicide component comprising tribasic copper sulphate (TBCS) and metalaxyl-M with the anionic surfactant blend comprising sodium naphthalene sulfonate, sodium lignosulfonate and tristyrylphenol phosphate surfactant to obtain a pre-mix,
(ii) coating the pre-mix on carrier granules to obtain coated granules, and
(iii) drying the coated granules to obtain a granular fungicidal composition.

According to an embodiment, a process for preparing a granular fungicidal composition comprising:
(a) a fungicide component comprising tribasic copper sulphate (TBCS) and metalaxyl; and
(b) an anionic surfactant blend comprising sodium naphthalene sulfonic acid, sodium lignosulfonic acid and tristyrylphenol phosphate surfactant;
wherein the process comprises:
(i) mixing the fungicide component comprising tribasic copper sulphate (TBCS) and metalaxyl with the anionic surfactant blend comprising sodium naphthalene sulfonic acid, sodium lignosulfonic acid and tristyrylphenol phosphate surfactant to obtain a pre-mix,
(ii) coating the pre-mix on carrier granules to obtain coated granules, and
(iii) drying the coated granules to obtain a granular fungicidal composition.

According to an embodiment, a process for preparing a granular fungicidal composition comprising:
(a) a fungicide component comprising tribasic copper sulphate (TBCS) and metalaxyl-M; and
(b) an anionic surfactant blend comprising sodium naphthalene sulfonic acid, sodium lignosulfonic acid and tristyrylphenol phosphate surfactant;
wherein the process comprises:
(i) mixing the fungicide component comprising tribasic copper sulphate (TBCS) and metalaxyl-M with the anionic surfactant blend comprising sodium naphthalene sulfonic acid, sodium lignosulfonic acid and tristyrylphenol phosphate surfactant to obtain a pre-mix,
(ii) coating the pre-mix on carrier granules to obtain coated granules, and
(iii) drying the coated granules to obtain a granular fungicidal composition.

According to an embodiment, the target crop may include, cereals such as wheat, barley, rye, oats, corn, rice, sorghum, triticale and related crops; beets such as sugar beet and fodder beet; leguminous plants such as beans, lentils, peas, soybean, chickpeas; dry bean, dry pea, Rye, Triticale, oat, wheat, barley, oil plants such as rape, mustard, sunflowers; cucurbits such as marrows, cucumbers, melons; fibre plants such as cotton, flax, hemp, jute; vegetables such spinach, lettuce, asparagus, cabbages, carrots, onions, tomatoes, potatoes, paprika as well as ornamentals such as flowers, shrubs, broad-leaved trees and evergreens, such as conifers.

According to an embodiment, the fungicidal composition of the present disclosure can be used to control fungal diseases, for example pea diseases caused by one or more species of: *Alternaria alternata, Aphanomyces euteichesf. sp. pisi, Ascochyta pinodella, Ascochyta pinodes, Ascochyta pisi, Botryotinia fuckeliana, Botrytis cinerea, Cercospora pisa-sativae, Chalara elegans, Cladosporium cladosporioides f. sp. pisicoia, Cladosporium pisicoia, Colletotrichum gloeosporioides, Colletotrichum pisi, Erysiphe pisi, Fusarium oxysporum, Fusarium oxysporum. sp. pisi, Fusarium solani, Fusicladium pisicoia, Glomerella cingulata, Mycosphaerella pinodes, Oidium sp., Peronospora viciae, Phoma pinodella, Pythium spp., Rhizoctonia solani, Sclerotinia sclerotiorum, Septoria pisi, Thanatephonis cucumeris, Thielaviopsis hasicola and Uromyces fabae, Soybean diseases: Cercospora kikuchii, Elsinoe glycines, Diaporthe phaseolorum var. sojae, Septoria glycines, Cercospora sojina, Phakopsora pachyrhizi, Phytophthora sojae Rhizoctonia solani.*

In a preferred embodiment, the fungicidal composition may be used to control a broad spectrum of plant diseases, such as:
Disease in rice: Blast (*Magnaporthe* grisea), Helminthosporium leaf spot (*Cochliobolus miyabeanus),* sheath blight *(Rhizoctonia solani),* and bakanae disease (*Gibberella fujikuroi).*
Diseases in wheat: powdery mildew (Erysiphe graminis), Fusariuin head blight (*Fusarium graminearum, F. avenacerum, F. culmorum, Microdochium nivale*)*,* rust (*Puccinia striiformis, P. graminis, P. recondita),* pink snow mold *(Micronectriella nivale),* Typhula snow blight (*Typhula* sp.), loose smut (*Ustilago tritici*)*,* bunt (*Tilletia caries),* eyespot (Pseudocercosporella herpotrichoides), leaf blotch (*Mycosphaerella graminicola),* glume blotch (Stagonospora nodorum), septoria, and yellow spot (*Pyrenophora tritici-repentis).*
Diseases in barley: powdery mildew (*Erysiphe graminis),* Fusarium head blight (*Fusarium graminearum, F. avenacerum, F. culmorum, Microdochium nivale*)*,* rust (*Puccinia striiformis, P. graminis, P. hordei*)*,* loose smut (*Ustilago nuda),* scald (*Rhynchosporium secalis*)*,* net blotch (*Pyrenophora teres),* spot blotch (*Cochliobolus sativus*)*,* leaf stripe *(Pyrenophora graminea*)*,* and Rhizoctonia damping-off (*Rhizoctonia solani).*
Diseases in corn: smut (*Ustilago maydis*)*,* brown spot (*Cochliobolus heterostrophus),* copper spot (*Gloeocercospora sorghi*)*,* southern rust (*Puccinia polysora*)*,* gray leaf spot *(Cercospora zeae-maydis*)*,* white spot (*Phaeosphaeria mydis* and/or *Pantoea ananatis)* and Rhizoctonia damping-off (*Rhizoctonia solani).*
Diseases in citrus: melanose (*Diaporthe citri*)*,* scab (*Elsinoe fawcetti*)*,* penicillium rot (*Penicillium digitatum, P. italicum*)*,* and brown rot (*Phytophthora parasitica, Phytophthora citrophthora*)*.*
Diseases in apple: blossom blight (*Monilinia mali),* canker (Valsa ceratosperma), powdery mildew (Podosphaera leucotricha), Alternaria leaf spot (Alternaria alternata apple pathotype), scab (*Venturia inaequalis*), powdery mildew, bitter rot (Colletotrichum acutatum), crown rot (*Phytophtora cactorum*)*,* blotch (*Diplocarpon mali*)*,* and ring rot (*Botryosphaeria berengeriana*)*.*
Diseases in pear: scab (*Venturia nashicola, V. pirina*)*,* powdery mildew, black spot *(Alternaria alternata* Japanese pear pathotype), rust (*Gymnosporangium haraeanum),* and phytophthora fruit rot (*Phytophtora cactorum).*
Diseases in peach: brown rot (*Monilinia fructicola),* powdery mildew, scab (*Cladosporium carpophilum),* and phomopsis rot (*Phomopsis sp.).*
Diseases in grapes: anthracnose *(Elsinoe ampelina),* ripe rot (*Glomerella cingulata),* powdery mildew (*Uncinula necator*)*,* rust (*Phakopsora ampelopsidis),* black rot *(Guignardia bidwellii),* botrytis, and downy mildew (*Plasmopara viticola).*
Diseases in Japanese persimmon: anthracnose (*Gloeosporium kakz),* and leaf spot *(Cercospora kaki, Mycosphaerella nawae).*
Diseases in gourd: anthracnose (*Colletotrichum lagenarium*)*,* powdery mildew *(Sphaerotheca fuliginea*)*,* gummy stem blight (*Mycosphaerella melonis),* Fusarium wilt (*Fusarium oxysporum),* downy mildew (*Pseudoperonospora cubensis),* Phytophthora rot *(Phytophthora sp.), and* damping-off *(Pythium sp.).*
Diseases in tomato: early blight *(Alternaria solani),* leaf mold (*Cladosporium fulvum),* and late blight (*Phytophthora infestans).*
Diseases in eggplant: brown spot (*Phomopsis vexans),* and powdery mildew (*Erysiphe cichoracearum)* Diseases of cruciferous vegetables: Alternaria leaf spot (Alternaria japonica), white spot (*Cercosporella brassicae*)*,* clubroot (*Plasmodiophora brassicae*)*,* and downy mildew (*Peronospora parasitica).*
Diseases in onion: rust (Puccinia allii), and downy mildew (Peronospora destructor)
Diseases in soybean: purple seed stain *(Cercospora kikuchii),* sphaceloma scad (*Elsinoe glycines*)*,* pod and stem blight (*Diaporthe phaseolorum var. sojae),* septoria brown spot (Septoria glycines), frogeye leaf spot *(Cercospora sojina*), rust (Phakopsora pachyrhizi), Yellow rust, brown stem rot (*Phytophthora sojae),* and Rhizoctonia damping-off *(Rhizoctonia solani).*
Diseases in kidney bean: anthracnose (*Colletotrichum lindemthianum*)*.* Diseases of peanut: leaf spot (*Cercospora personata*), brown leaf spot (*Cercospora arachidicola*) and southern blight (Sclerotium rolfsii).
Diseases in garden pea: powdery mildew (*Erysiphe pisi*)*,* and root rot (*Fusarium solani* f. sp. pisi).
Diseases in potato: early blight *(Alternaria solani),* late blight (*Phytophthora infestans*), pink rot (*Phytophthora erythroseptica),* and powdery scab *(Spongospora subterranean f. sp. subterranea).*
Diseases in strawberry: powdery mildew (*Sphaerotheca humuli*)*,* and anthracnose *(Glomerella cingulata).*
Diseases in tea: net blister blight *(Exobasidium reticulatum),* white scab (*Elsinoe leucospila*)*,* gray blight (*Pestalotiopsis* sp.), and anthracnose *(Colletotrichum theae-sinensis).*
Diseases in tobacco: brown spot (*Alternaria longipes),* powdery mildew *(Erysiphe cichoracearum),* anthracnose (*Colletotrichum tabacum*)*,* downy mildew (*Peronospora tabacina),* and black shank (*Phytophthora nicotianae).*
Diseases in rapeseed: sclerotinia rot (*Sclerotinia sclerotiorum*)*,* and Rhizoctonia damping-off *(Rhizoctonia solani).* Diseases of cotton: Rhizoctonia damping-off *(Rhizoctonia solani).*
Diseases in sugar beet: Cercospora leaf spot *(Cercospora beticola*), leaf blight (*Thanatephorus cucumeris),* Root rot (*Thanatephorus cucumeris*)*,* and Aphanomyces root rot *(Aphanomyces cochlioides).*
Diseases in rose: black spot *(Diplocarpon rosae*)*,* powdery mildew (*Sphaerotheca pannosa),* and downy mildew (*Peronospora sparsa).* Diseases of chrysanthemum and asteraceous plants: downy mildew (*Bremia lactucae*), leaf blight (*Septoria chrysanthemi-indici),* and white rust (*Puccinia horiana*).
Diseases in various groups: diseases caused by Pythium spp. (*Pythium aphanidermatum, Pythium debarianum, Pythium graminicola, Pythium irregulars, Pythium ultimum),* gray mold. (*Botrytis cinerea*)*,* and Sclerotinia rot (*Sclerotinia sclerotiorum).*
Diseases in Japanese radish: Alternaria leaf spot (*Alternaria brassicicola*)*.*
Diseases in turfgrass: dollar spot (*Sclerotinia homeocarpa),* and brown patch and large patch *(Rhizoctonia solani).*
Diseases in banana: Black sigatoka (*Mycosphaerella fijiensis*)*,* Yellow sigatoka *(Mycosphaerella musicola).*
Diseases in sunflower: downy mildew (*Plasmopara halstedii).*

In another embodiment, the seed diseases or diseases in the early stages of the growth of various plants are caused by *Aspergillus spp., Penicillium spp., Fusarium spp., Gibberella* spp., *Tricoderma spp., Thielaviopsis spp., Rhizopus spp., Mucor spp., Corticium spp., Phoma spp., Rhizoctonia spp.* and *Diplodia spp.* Additionally, viral diseases of various plants are mediated by *Polymixa* spp. or *Olpidium* spp. and so on.

According to an embodiment, the present disclosure provides a method for controlling the growth of fungal pests, the method comprising applying to a plant, or a locus, or a plant propagation material thereof, an effective amount of a fungicidal composition comprising an inorganic copper compound and a phenylamide fungicide.

In a preferred embodiment, the present disclosure provides a method for controlling the growth of fungal pests, the method comprising applying to a plant, or a locus, or a plant propagation material thereof, an effective amount of a fungicidal composition comprising:
(a) a fungicide component; and
(b) a surfactant blend.

In a preferred embodiment, the present disclosure provides a method for controlling the growth of fungal pests, the method comprising applying to a plant, or a locus, or a plant propagation material thereof, an effective amount of a fungicidal composition comprising:
(a) a fungicide component comprising a copper compound and a phenylamide fungicide; and
(b) an anionic surfactant blend;
wherein a weight ratio of the fungicide component to the anionic surfactant blend is 1:1 to 20:1.

In a preferred embodiment, the present disclosure provides a method for controlling the growth of fungal pests, the method comprising applying to a plant, or a locus, or a plant propagation material thereof, an effective amount of a fungicidal composition comprising:
(a) a fungicide component comprising tribasic copper sulphate (TBCS) and metalaxyl; and
(b) an anionic surfactant blend comprising sodium naphthalene sulfonate, sodium lignosulfonate and tristyrylphenol phosphate surfactant;
wherein a weight ratio of the fungicide component to the anionic surfactant blend is 1:1 to 20:1.

In a preferred embodiment, the present disclosure provides a method for controlling the growth of fungal pests, the method comprising applying to a plant, or a locus, or a plant propagation material thereof, an effective amount of a fungicidal composition comprising:
(a) a fungicide component comprising tribasic copper sulphate (TBCS) and metalaxyl-M; and
(b) an anionic surfactant blend comprising sodium naphthalene sulfonate, sodium lignosulfonate and tristyrylphenol phosphate surfactant;
wherein a weight ratio of the fungicide component to the anionic surfactant blend is 1:1 to 20:1.

In a preferred embodiment, the present disclosure provides a method for controlling the growth of fungal pests, the method comprising applying to a plant, or a locus, or a plant propagation material thereof, an effective amount of a fungicidal composition comprising:
(a) a fungicide component comprising tribasic copper sulphate (TBCS) and metalaxyl; and
(b) an anionic surfactant blend comprising sodium naphthalene sulfonic acid, sodium lignosulfonic acid and tristyrylphenol phosphate surfactant;
wherein a weight ratio of the fungicide component to the anionic surfactant blend is 1:1 to 20:1.

In a preferred embodiment, the present disclosure provides a method for controlling the growth of fungal pests, the method comprising applying to a plant, or a locus, or a plant propagation material thereof, an effective amount of a fungicidal composition comprising:
(a) a fungicide component comprising tribasic copper sulphate (TBCS) and metalaxyl-M; and
(b) an anionic surfactant blend comprising sodium naphthalene sulfonic acid, sodium lignosulfonic acid and tristyrylphenol phosphate surfactant;
wherein a weight ratio of the fungicide component to the anionic surfactant blend is 1:1 to 20:1.

In a preferred embodiment, the present disclosure provides a method for controlling the growth of fungal pests, the method comprising applying to a plant, or a locus, or a plant propagation material thereof, an effective amount of a fungicidal composition comprising:
(a) a fungicide component comprising tribasic copper sulphate (TBCS) and metalaxyl;
(b) an anionic surfactant blend comprising sodium naphthalene sulfonate, sodium lignosulfonate and tristyrylphenol phosphate surfactant; and
(c) at least one agrochemically acceptable excipient;
wherein a weight ratio of the fungicide component to the anionic surfactant blend is 1:1 to 20:1.

In a preferred embodiment, the present disclosure provides a method for controlling the growth of fungal pests, the method comprising applying to a plant, or a locus, or a plant propagation material thereof, an effective amount of a fungicidal composition comprising:
(a) a fungicide component comprising tribasic copper sulphate (TBCS) and metalaxyl-M;
(b) an anionic surfactant blend comprising sodium naphthalene sulfonate, sodium lignosulfonate and tristyrylphenol phosphate surfactant; and
(c) at least one agrochemically acceptable excipient;
wherein a weight ratio of the fungicide component to the anionic surfactant blend is 1:1 to 20:1.

In a preferred embodiment, the present disclosure provides a method for controlling the growth of fungal pests, the method comprising applying to a plant, or a locus, or a plant propagation material thereof, an effective amount of a fungicidal composition comprising:
(a) a fungicide component comprising tribasic copper sulphate (TBCS) and metalaxyl;
(b) an anionic surfactant blend comprising sodium naphthalene sulfonic acid, sodium lignosulfonic acid and tristyrylphenol phosphate surfactant; and
(c) at least one agrochemically acceptable excipient;
wherein a weight ratio of the fungicide component to the anionic surfactant blend is 1:1 to 20:1.

In a preferred embodiment, the present disclosure provides a method for controlling the growth of fungal pests, the method comprising applying to a plant, or a locus, or a plant propagation material thereof, an effective amount of a fungicidal composition comprising:
(a) a fungicide component comprising tribasic copper sulphate (TBCS) and metalaxyl-M;
(b) an anionic surfactant blend comprising sodium naphthalene sulfonic acid, sodium lignosulfonic acid and tristyrylphenol phosphate surfactant; and
(c) at least one agrochemically acceptable excipient;
wherein a weight ratio of the fungicide component to the anionic surfactant blend is 1:1 to 20:1.

According to an embodiment, the various components of the fungicidal composition can be used individually or already partially or completely mixed with each other to prepare the fungicidal composition. It is also possible for the components to be separately packaged and used as a composition such as a kit of parts.

According to an embodiment, the various components of the granular fungicidal composition can be used individually or already partially or completely mixed with each other to prepare the granular fungicidal composition. It is also possible for the components to be separately packaged and used as a composition such as a kit of parts.

In a preferred embodiment, the various components of the WDG fungicidal composition can be used individually or already partially or completely mixed with each other to prepare the WDG fungicidal composition. It is also possible for the components to be separately packaged and used as a composition such as a kit of parts.

In one embodiment, the kits may include one or more of the components that are used to prepare a fungicidal composition. For examples, the kits may include active ingredients and/or surfactant blend. One or more of the components may already be combined together or pre-formulated.

According to an embodiment of the present disclosure, a kit comprising a fungicidal composition is provided. The kit comprises a plurality of components, including at least one of the ingredients of the fungicidal composition of the present disclosure.

In one embodiment of the present disclosure, the kit includes at least one, or all of components needed to prepare the fungicidal composition. For example, the kit may include a copper compound and a phenylamide fungicide and a surfactant blend.

The disclosure also provides a kit comprising fungicidal combination for the controlling the growth of fungal pests and instructions for use. The instructions for use typically comprise instructions for the application of the fungicidal combination to a plant, or a locus, or a plant propagation material thereof.

According to an embodiment, the kit of parts comprises:
(a) a fungicide component; and
(b) an anionic surfactant blend;
and optionally further comprises:
(c) instructions for use.

In a preferred embodiment, the kit of parts comprises:
(a) a fungicide component;
(b) an anionic surfactant blend; and
(c) at least one agrochemically acceptable excipient;
and optionally further comprises:
(d) instructions for use.

According to an embodiment, the kit of parts comprises:
(a) a fungicide component comprising tribasic copper sulphate (TBCS) and metalaxyl;
(b) an anionic surfactant blend comprising sodium naphthalene sulfonate, sodium lignosulfonate and tristyrylphenol phosphate surfactant; and
(c) at least one agrochemically acceptable excipient;
and optionally further comprises:
(d) instructions for use.

According to an embodiment, the kit of parts comprises:
(a) a fungicide component comprising tribasic copper sulphate (TBCS) and metalaxyl-M;
(b) an anionic surfactant blend comprising sodium naphthalene sulfonate, sodium lignosulfonate and tristyrylphenol phosphate surfactant; and
(c) at least one agrochemically acceptable excipient;
and optionally further comprises:
(d) instructions for use.

According to an embodiment, the kit of parts comprises:
(a) a fungicide component comprising tribasic copper sulphate (TBCS) and metalaxyl;
(b) an anionic surfactant blend comprising sodium naphthalene sulfonic acid, sodium lignosulfonic acid and tristyrylphenol phosphate surfactant; and
(c) at least one agrochemically acceptable excipient;
and optionally further comprises:
(d) instructions for use.

According to an embodiment, the kit of parts comprises:
(a) a fungicide component comprising tribasic copper sulphate (TBCS) and metalaxyl-M;
(b) an anionic surfactant blend comprising sodium naphthalene sulfonic acid, sodium lignosulfonic acid and tristyrylphenol phosphate surfactant; and
(c) at least one agrochemically acceptable excipient;
and optionally further comprises:
(d) instructions for use.

In one embodiment of the disclosure, the kit may include one or more, including all, components that may be used to prepare the fungicidal combination, e.g., kits may include active ingredients and/or agrochemically acceptable excipient. One or more of the components may already be combined together or pre-formulated. In those embodiments where more than two components are provided in a kit, the components may already be combined together and as such are packaged in a single container such as a vial, bottle, can, pouch, bag or canister. In other embodiments, two or more components of a kit may be packaged separately, i.e., not pre-formulated. As such, kits may include one or more separate containers such as vials, cans, bottles, pouches, bags or canisters, each container containing a separate component for fungicidal combination.

In both forms, a component of the kit may be applied separately from or together with the further components or as a component of a combination according to the disclosure for preparing the fungicidal combination according to the disclosure.

In another embodiment, the fungicidal combination of the present disclosure is stable, over time and at various temperatures.

According to an embodiment of the present disclosure, the fungicide composition preferably retains its physical integrity during handling and spreading, and, upon broadcasting, typically releases the active ingredients when in contact with wet soil, irrigation water, or rainfall hitting the broadcasting granules.

In view of the above, it will be seen that the several advantages of the disclosure are achieved, and other advantageous results are also attained. Although the present disclosure has been disclosed in full, it will be understood that numerous additional modifications and variations could be made thereto without departing from the scope of the disclosure.

It will be understood that the specification and examples are illustrative but not limitative of the present disclosure and that other embodiments within the spirit and scope of the disclosure will suggest themselves to those skilled in the art. Other embodiments can be practiced that are also within the scope of the present disclosure. The following examples illustrate the disclosure, but by no means intend to limit the scope of the claims.

### EXAMPLES:

### Example 1: WDG Composition comprising TBCS and Metalaxyl-M

| **Ingredients** | **Concentration (% w/w)** |
|---|---|
| Tribasic copper sulfate (TBCS) | 30 |
| Metalaxyl-M | 4.8 |
| Sodium naphthalene sulfonic acid | 6.0 |
| Sodium lignosulfonic acid | 6.0 |
| Tristyrylphenol phosphate surfactant | 1.5 |
| Silicone oil | 0.2 |
| Water | Q.S. |
| Total | 100 |

### Process:

Tribasic copper sulfate (TBCS) was mixed with metalaxyl-M, sodium naphthalene sulfonic acid, sodium lignosulfonic acid, tristyrylphenol phosphate surfactant and silicone oil to obtain a pre-mix. The pre-mix was coated on carrier granules to obtain coated granules, and the coated granules were dried to obtain the WDG fungicidal composition.

### Example 2: Stability studies

The WDG fungicidal composition as disclosed in Example 1 was evaluated for its stability. The composition was determined at T₀, and under accelerated heat stability (AHS) conditions for 14 days at 54°C designated as T₁. The stability was also evaluated after 3 months, at 40°C, designated as T₂.

**Table 1: Stability study of composition of Example 1**

| **Parameters** | **T₀** | T₁ **(AHS) 14 Days/54°C** | T₂ **3 Months/40°C** |
|---|---|---|---|
| **Retention of actives** | | | |
| Copper content (%) | 30.7 | 30.8 | 30.6 |
| Metalaxyl-M (%) | 5.01 | 5.00 | 4.91 |

| **Particle size analysis (Malvern 3000) (µm)** | | | |
|---|---|---|---|
| D₅₀ | 1.83 | 1.84 | 1.83 |
| D₁₀ | 0.59 | 0.56 | 0.58 |
| D₉₀ | 6.78 | 6.79 | 6.81 |
| **Suspensibility (%)** | 89 | 88 | 87 |

### Retention of actives:

The concentrations of the actives of tribasic copper sulphate (TBCS) and metalaxyl-M in the present WDG fungicidal composition were maintained with minimal loss for a period extending up to three months with elevated temperature conditions. Even at AHS conditions, the concentration of the actives was maintained with negligible loss.

### Suspensibility:

The suspensibility of the composition was also maintained at AHS conditions (T₁) and at conditions of 40°C for 3 months (T₂).

## Claims

1. A granular fungicidal composition comprising:
(a) a fungicide component; and
(b) an anionic surfactant blend;
wherein a weight ratio of the fungicide component to the anionic surfactant blend is 1:1 to 20:1.

2. The composition as claimed in claim 1, wherein the fungicide component comprises a copper compound and a phenylamide fungicide.

3. The composition as claimed in claim 2, wherein the copper compound is tribasic copper sulphate (TBCS).

4. The composition as claimed in claim 2, wherein the phenylamide fungicide is selected from the group comprising metalaxyl, metalaxyl-M, furalaxyl, benalaxyl, ofurace, oxadixyl, or their isomers thereof.

5. The composition as claimed in claim 4, wherein the phenylamide fungicide is metalaxyl or metalaxyl-M.

6. The composition as claimed in claim 1, wherein the anionic surfactant blend comprises at least two salts of sulfonic acid surfactant and a phosphate ester surfactant.

7. The composition as claimed in claim 6, wherein the sulfonic acid surfactant is selected from the group comprising sodium naphthalene sulfonate, sodium naphthalene sulfonic acid, sodium lignosulfonate and sodium lignosulfonic acid.

8. The composition as claimed in claim 6, wherein the phosphate ester surfactant is tristyrylphenol phosphate surfactant.

9. The composition as claimed in claim 6, the at least two sulfonic acid surfactants and the phosphate ester surfactant are present in a weight ratio from about 15:15:1 to about 1:1:1.

10. The composition as claimed in claim 1, wherein the composition comprises from about 20% w/w to about 40% w/w of the fungicide component of total weight of the fungicidal composition.

11. The composition as claimed in claim 1, wherein the composition comprises from 5% w/w to about 30% w/w of the anionic surfactant blend of total weight of the fungicidal composition.

12. The composition as claimed in claim 2, wherein the composition comprises from about 20% w/w to about 40% w/w of the copper compound of total weight of the fungicidal composition.

13. The composition as claimed in claim 2, wherein the composition comprises from about 1% w/w to about 10% w/w of the phenylamide fungicide of total weight of the fungicidal composition.

14. The composition as claimed in claim 2, wherein the copper compound and the phenylamide fungicide are present in a weight ratio from about 10:1 to about 1:1.

15. The composition as claimed in claim 1, wherein the composition is in a form of a pre-formulated (pre-mix)/ready-mix formulation

16. A water-dispersible granule (WDG) fungicidal composition comprising:
(a) a fungicide component comprising tribasic copper sulphate (TBCS) and metalaxyl; and
(b) an anionic surfactant blend comprising sodium naphthalene sulfonic acid, sodium lignosulfonic acid and tristyrylphenol phosphate surfactant;
wherein a weight ratio of the fungicide component to the anionic surfactant blend is 1: 1 to 20:1.

17. A water-dispersible granule (WDG) fungicidal composition comprising:
(c) a fungicide component comprising tribasic copper sulphate (TBCS) and metalaxyl-M; and
(d) an anionic surfactant blend comprising sodium naphthalene sulfonic acid, sodium lignosulfonic acid and tristyrylphenol phosphate surfactant;
wherein a weight ratio of the fungicide component to the anionic surfactant blend is 1: 1 to 20:1.

18. Use of a granular fungicidal composition comprising a fungicide component and an anionic surfactant blend, for controlling growth of fungal pests;
wherein a weight ratio of the fungicide component to the anionic surfactant blend is 1: 1 to 20:1.

19. A method for controlling growth of fungal pests, the method comprising: applying to a plant, or a locus, or a plant propagation material thereof, an effective amount of a granular fungicidal composition comprising a fungicide component and an anionic surfactant blend;
wherein a weight ratio of the fungicide component to the anionic surfactant blend is 1: 1 to 20: 1.
